# EUROPÄISCHE PATENTSCHRIFT

(11) **EP 2 724 006 B1**
(45) Veröffentlichungstag und Bekanntmachung des Hinweises auf die Patenterteilung: **31.10.2018**
(21) Anmeldenummer: 12755996.1
(22) Anmeldetag: 03.09.2012
(51) Int. Cl.: F02C 6/16

(54) **LUFTTURBINENANLAGE UND ZUGEHÖRIGE VERFAHREN**
AIR TURBINE AND CORRESPONDING METHODS
TURBINE D'AIR ET PROCÉDÉS ASSOCIÉS

(30) Priorität: 16.09.2011 DE 102011082827
(43) Veröffentlichungstag der Anmeldung: 30.04.2014
(73) Patentinhaber: Siemens Aktiengesellschaft, 80333 München (DE)
(72) Erfinder: HAJE, Detlef, 02828 Görlitz (DE); HERTWIG, Holger, 02708 Großschweidnitz (DE)
(86) Internationale Anmeldenummer: PCT/EP2012/067103
(87) Internationale Veröffentlichungsnummer: WO 2013/037655

(56) Entgegenhaltungen:
- WO-A1-03/078812
- WO-A1-2004/005685
- DE-A1- 10 258 594
- DE-A1-102004 034 657
- US-A1- 2011 094 236

## Beschreibung

Die Erfindung betrifft eine Luftturbinenanlage nach dem Oberbegriff des Patentanspruchs 1 sowie Verfahren zur Reduzierung der Luftfeuchte in Luftturbinenanlagen nach Patentanspruch 8 und 9.

In Luftturbinenanlagen wird Druckluft einer Luftturbine zugeführt und in der Luftturbine entspannt. Dabei wird die Druckenergie der Druckluft in kinetische Energie umgewandelt, welche zum Antreiben der Turbinenschaufeln der Luftturbine dient. Als Druckquelle kann beispielsweise ein Druckluftspeicher oder ein Kompressor dienen. Gattungsgemäße Luftturbinenanlagen sind beispielsweise aus der DE 102 58 594 A1 bekannt.

Im Expansionsbetrieb der Luftturbine treten am kalten Ende Luftturbine Temperaturen von ca. 5°C auf. Nach dem Abschalten der Luftturbine kann durch das abkühlungsbedingte Zusammenziehen, der in der Luftturbine verbliebenen Luft, Umgebungsluft durch den Ablufttrakt der Luftturbine in die Luftturbine gelangen. Die Luftfeuchtigkeit der Umgebungsluft ist unter Umständen sehr hoch, so dass es zu einer Auskondensation der Luftfeuchte innerhalb der Luftturbine kommt, wodurch es nachfolgend zu Korrosionsschäden an der Luftturbine kommen kann. Um Korrosionsschäden an der Luftturbine zu vermeiden, werden Absorbtionstrocknungsanlagen verwendet, die die Luftfeuchte in der Luftturbine reduzieren. Die

Absorbtionstrockungsanlagen sind jedoch teuer und haben einen komplexen Aufbau.

Ausgehend vom Stand der Technik ist es somit Aufgabe der vorliegenden Erfindung, eine Luftturbinenanlage bereitzustellen, die Korrosionsschäden aufgrund von hoher Luftfeuchtigkeit vermeidet und die einfach im Aufbau ist. Des Weiteren ist es Aufgabe der vorliegenden Erfindung, Verfahren zur Reduzierung der Luftfeuchte in Luftturbinenanlagen der vorbeschriebenen Art bereitzustellen.

Die Aufgabe wird hinsichtlich der Luftturbinenanlage nach den Merkmalen des unabhängigen Patentanspruchs 1 gelöst. Hinsichtlich der Verfahren wird die Aufgabe der vorliegenden Erfindung anhand der unabhängigen Verfahrensansprüche 8 und 9 gelöst.

Weitere Ausgestaltungen der Erfindung, die einzeln oder in Kombination miteinander einsetzbar sind, sind Gegenstand der Unteransprüche.

Die erfindungsgemäße Luftturbinenanlage umfassend wenigstens eine Luftturbine und wenigstens eine Druckquelle, wobei die Luftturbine wenigstens einen Einlass und einen Abluftschacht aufweist und wobei der Einlass der Luftturbine über eine Zuleitung mit der Druckluftquelle verbindbar ist, zeichnet sich dadurch aus, dass entlang einer Expansionsstrecke der Luftturbine, eine erste Leitung mit einem ersten Ventil abzweigt und die erste Leitung mit einem Luftspeicher verbunden ist. Über die erste Leitung kann während des Expansionsbetriebes der Luftturbine trockene Luft, das heißt Luft mit einer geringen Luftfeuchtigkeit, der Luftturbine entnommen werden und in dem Luftspeicher gespeichert werden. Während des Stillstands der Luftturbine, kann die trockene Luft über die erste Leitung wieder der Luftturbine zugeführt werden. Durch das Zuführen der trockenen Luft wird eine Kondensation von Luftfeuchtigkeit in der Luftturbine vermieden, so dass es zu keinen Korrosionserscheinungen kommt.

Unter trockener Luft ist Luft mit einer geringen Luftfeuchtigkeit, vorzugsweise mit einer relativen Luftfeuchte von < 20% bevorzugt < 10% zu verstehen.

Eine Ausgestaltung der Erfindung sieht vor, dass das erste Ventil ein Zweiwegeventil ist. Das Zweiwegeventil ist dabei so schaltbar, dass während des Expansionsbetriebs die trockene Luft von der Luftturbine in den Luftspeicher strömt und während des Stillstands der Luftturbine, das Ventil so geschaltet ist, dass die trockene Luft von dem Luftspeicher zurück zur Luftturbine strömen kann.

Eine weitere Ausgestaltung der Erfindung sieht vor, dass die Luftturbinenanlage eine zweite Leitung mit einem zweiten Ventil aufweist und die zweite Leitung ebenfalls mit dem Luftspeicher verbunden ist. Bei einer derartigen Konstruktion kann die trockene Luft während des Expansionsbetriebs über die erste Leitung mit dem ersten Ventil in den Luftspeicher hineinströmen. Während des Stillstands der Luftturbine kann die trockene Luft über die zweite Leitung und das zweite Ventil aus dem Luftspeicher hinausströmen und der Luftturbine zugeführt werden. Die trockene Luft sorgt wiederum dafür, dass keine Feuchtigkeit aus der Luft auskondensieren kann, die sich an der Turbineninnenwand niederschlägt und zu Korrosionsschäden führen kann.

Eine weitere Ausgestaltung der Erfindung sieht vor, dass die zweite Leitung stromaufwärts der ersten Leitung in die Luftturbine oder in die Zuleitung zur Luftturbine mündet. Je weiter stromaufwärts die zweite Leitung in die Luftturbine mündet, desto größer ist die Strecke innerhalb der Luftturbine, die von der trockenen Luft durchströmt wird, und desto geringer ist die Gefahr dass sich Luftfeuchtigkeit in der Turbine niederschlagen kann. Wird die zweite Leitung auf die Zuleitung zur Luftturbine geführt, wird die trockene Luft bereits durch den Einlass der Luftturbine in die Luftturbine geführt.

Eine weitere Ausgestaltung der Erfindung sieht vor, dass in der Zuleitung zur Luftturbine ein Luftvorwärmer, insbesondere ein Rekuperator angeordnet ist. Durch die Anordnung eines Luftvorwärmers in der Zuleitung zur Luftturbine wird sichergestellt, dass die der Luftturbine zugeführte Luft vorgewärmt ist und dass dadurch die zugeführte Luft eine geringe relative Luftfeuchtigkeit aufweist.

Ein erfindungsgemäßes Verfahren zur Reduzierung der Luftfeuchte in Luftturbinenanlagen, insbesondere während des Stillstands der Luftturbinenanlage, wobei entlang der Expansionsstrecke der Luftturbine eine erste Leitung mit einem ersten Ventil abzweigt, wobei das erste Ventil derart schaltbar ist, dass es die erste Leitung entweder in die eine oder in die andere Richtung freigibt und wobei die Leitung mit dem Luftspeicher verbunden ist, zeichnet sich durch die folgenden Verfahrensschritte aus:
- Entnehmen wenigstens eines Teilvolumenstroms der Luft während des Expansionsbetriebs der Luftturbinenanlage über die erste Leitung;
- Speichern der entnommenen Luft im Luftspeicher;
- Zuführen der im Luftspeicher gespeicherten Luft über die erste Leitung in die Luftturbine beim Erreichen einer höchstzulässigen Luftfeuchte in der Luftturbine.

Durch das Zuführen der trockenen Luft wird die Luftfeuchtigkeit in der Luftturbine gesenkt und ein Auskondensieren von Luftfeuchte innerhalb der Luftturbine wird wirkungsvoll verhindert. Hierdurch werden Korrosionsschäden an der Luftturbine wirkungsvoll verhindert.

Ein weiteres erfindungsgemäßes Verfahren zur Reduzierung der Luftfeuchte in Luftturbinenanlagen, insbesondere während des Stillstands der Luftturbinenanlage, wobei entlang der Expansionsstrecke der Luftturbine, eine erste Leitung mit einem ersten Ventil abzweig, die Luftturbinenanlage ein zweites Ventil aufweist, wobei die zweite Leitung mit dem Luftspeicher verbunden und die zweite Leitung stromaufwärts der ersten Leitung in die Luftturbine oder in die Zuleitung zur Luftturbine mündet, zeichnet sich durch die nachfolgenden Verfahrensschritte aus:
- Entnehmen wenigstens eines Teilvolumenstroms der Luft während des Expansionsbetriebs der Luftturbinenanlage über die erste Leitung;
- Speichern der entnommenen Luft im Luftspeicher;
- Zurückleiten der im Luftspeicher gespeicherten Luft über die zweite Leitung in die Luftturbine oder in die Zuleitung zur Luftturbine beim Erreichen einer höchstzulässigen Luftfeuchte in der Luftturbine.

Durch das Zurückleiten der trockenen Luft aus dem Luftspeicher in die Luftturbine insbesondere während des Stillstands der Turbine wird die Luftfeuchtigkeit innerhalb der Turbine reduziert und ein Auskondensieren von Luftfeuchte wird weitgehend verhindert, so dass es zu keinen Korrosionsschäden an der Luftturbine kommt.

Durch die Verwendung einer ersten Leitung und einer zweiten Leitung, wobei die zweite Leitung stromaufwärts der ersten Leitung in die Luftturbine oder in die Zuleitung zur Luftturbine mündet, wird ein größerer Bereich der Luftturbine mit trockener Luft durchströmt, wodurch sich die Gefahr eines Auskondensierens von Feuchtigkeit reduziert und die Korrosionsgefahr weiter verbessert wird.

Weitere vorteilhafte Ausgestaltungen der Erfindung werden nachfolgend anhand der Figuren erläutert. Es zeigt:
- Figur 1: ein erstes Ausführungsbeispiel einer erfindungsgemäßen Luftturbineanlage;
- Figur 2: ein zweites Ausführungsbeispiel einer erfindungsgemäßen Luftturbinenanlage.

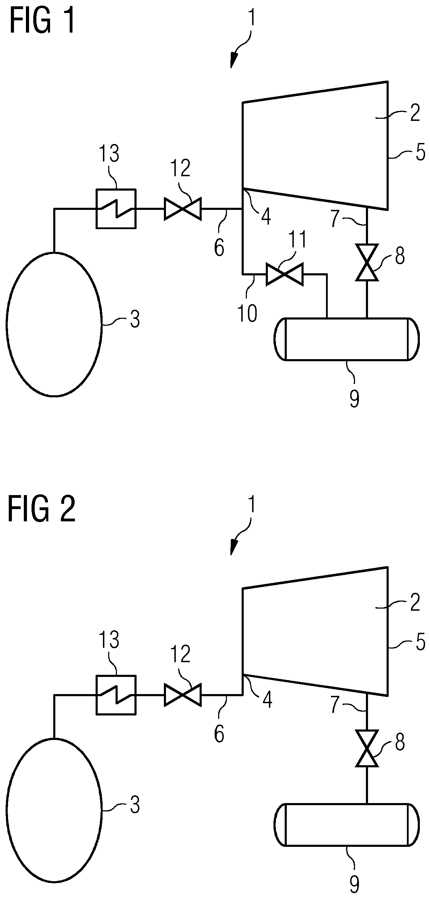

Figur 1 zeigt ein erstes Ausführungsbeispiel einer Luftturbinenanlage 1. Die Luftturbinenanlage 1 umfasst eine Luftturbine 2 und eine Druckluftquelle 3. Bei der Druckluftquelle 3 handelt es sich um eine Taverne in der die Luft unter Druck gespeichert wird. Grundsätzlich kann jedoch jede Art von Druckluftquellen verwendet werden. Die Druckluftquelle 3 ist über eine Zuleitung 6 mit einem Einlass 4 der Luftturbine 2 verbunden. In der Zuleitung 6 ist ein Regelventil 12 angeordnet, über das der Zustrom zur Luftturbine 2 regelbar ist. Ferner ist in der Zuleitung 6 zur Luftturbine 2, ein Luftvorwärmer 13, welcher in Form eines Rekuperators ausgebildet ist, angeordnet. Der Luftvorwärmer 13 wärmt die Luft vor Eintritt in die Luftturbine 2 an. Während des Expansionsbetriebes der Luftturbine 2 entspannt sich die unter Druck stehende Luft vom Einlass 4 hin zum Abluftschach 5, wodurch sich die Druckenergie in eine kinetische Energie umwandelt, die zum Antreiben der Turbinenschaufel dient. Die Turbinenschaufel sind in Figur 1 nicht dargestellt. Die Luftturbinenanlage 1 weist ferner eine nichtdargestellte Rotorwelle auf, an der die Turbinenschaufeln angeordnet sind, und die beispielsweise mit einem Generator zur Erzeugung von elektrischem Strom verbunden ist. Die Luftturbine 2 weist stromabwärts nahe des Abluftschachs 5, eine erste Leitung 7 auf, die mit einem Luftspeicher 9 verbunden ist. In der ersten Leitung 7 ist ein erstes Ventil 8 angeordnet. Das erste Ventil 8 dient zur Regelung der Strömungsrichtung, sowie zur Regulierung des abgeführten Volumenstroms. Vom Luftspeicher 9 führt eine zweite Leitung 10 zur Zuleitung 6. Die zweite Leitung 10 kann auch unmittelbar auf den Einlass 4 oder kurz hinter diesem direkt in die Luftturbine 2 münden. In der zweiten Leitung 10 ist ein zweites Ventil 11 angeordnet, welches wiederum dazu dient die Strömungsrichtung durch die Leitung festzulegen und den Volumenstrom zu regeln. Die Luftturbinenanlage 1 ist so ausgelegt, dass die Luftfeuchte in der Luftturbinenanlage 1 und insbesondre in der Luftturbine 2 eine höchstzulässige Luftfeuchte nicht überschreitet. Zu einer hohen Luftfeuchtigkeit innerhalb der Luftturbinenanlage 1 kommt es insbesondere bei Ausschalten der Luftturbine 2, da nach dem abschalten der Luftturbine 2, durch das abkühlungsbedingte Zusammenziehen der in der Luftturbine 2 verbliebenen Luft, Umgebungsluft durch den Abluftschacht 5 in die Luftturbine 2 gelangen kann. Die Umgebungsluft hat in der Regel eine höhere Luftfeuchtigkeit, die an der Luftturbinnenwandung auskondensieren und sich dort niederschlagen kann. Die Luftfeuchtigkeit führt dann zu Korrosion und im schlimmsten Fall zu korrosionsbedingten Ausfällen an der Luftturbine 2. Um die Luftfeuchte, insbesondere während des Stillstands der Luftturbinenanlage 1, niedrig zu halten, wird während des Expansionsbetriebes der Luftanlage 1 wenigstens ein Teilvolumenstrom der Luft über die erste Leitung 7 der Luftturbine 1 entnommen und dem Luftspeicher 9 zugeführt, wo die Luft gespeichert wird. Hierzu ist das erste Ventil 8 so geschaltet, dass es nur einen Volumenstrom von der Luftturbine 2 zum Luftspeicher 9 zulässt. Die Luft von der Luftturbine 2 weist eine geringe Luftfeuchtigkeit, vorzugsweise eine relative Luftfeuchtigkeit von < 20% bevorzugt < 10%, auf. Während des Expansionsbetriebes ist das zweite Ventil 11 geschlossen, so dass keine Luft über die zweite Leitung 10 aus dem Luftdruckspeicher 9 abfließen kann. Wenn die Luftturbine 2 abgeschaltet ist und innerhalb der Luftturbine 2 eine zuvor festgelegte zulässige Luftfeuchte überschritten wird, wird das zweite Ventil 10 geöffnet, so dass die trockene Luft aus dem Luftspeicher 9 über die zweite Leitung 10 dem Einlass 4 der Luftturbine 2 zugeführt wird. Die trockene Luft vermischt sich nachfolgend mit der Luft mit höherer Feuchtigkeit und sorgt damit für eine Reduzierung der relativen Luftfeuchte in der Luftturbine 2, wodurch ein Kondensieren von Luftfeuchte in der Luftturbine 2 verhindert wird. Hierdurch wird eine Korrosion innerhalb der Luftturbine 2 wirkungsvoll verhindert.

Figur 2 zeigt ein zweites Ausführungsbeispiel einer Luftturbinenanlage 1. Die Luftturbinenanlage 1 umfasst wiederum eine Luftturbine 2 und eine Druckluftquelle 3, die wiederum in Form einer Taverne ausgebildet ist. Die Luftdruckquelle 3 ist über eine Zuleitung 6 mit dem Einlass 4 der Luftturbine 2 verbunden. Innerhalb der Zuleitung ist ein Regelventil 12 angeordnet, welches den Zustrom von der Druckluftquelle 3 zur Luftturbine 2, sowie die Strömungsrichtung innerhalb der Zuleitung 6 regelt. Ferner ist in der Zuleitung 6 ein Luftvorwärmer 13 angeordnet, welcher die Luft vor Eintritt in die Luftturbine 2 erwärmt. Der Luftvorwärmer 13 ist vorzugsweise als Rekuperator ausgebildet. Während des Expansionsbetriebes der Luftturbinenanlage 1 strömt Druckluft von der Druckluftquelle 3 durch die Zuleitung 6 zum Einlass 4 der Luftturbine 2. Entlang der Expansionsstrecke innerhalb der Luftturbine 2 wird die Druckluft, wie bereits im Ausführungsbeispiel 1 beschrieben, in kinetische Energie umgewandelt. Vorzugsweise am Ende der Expansionsstrecke zweigt eine erste Leitung 7 von der Luftturbine 2 ab. Die erste Leitung 7 verbindet die Luftturbine mit einem Luftspeicher 9. Innerhalb der ersten Leitung 7 ist ein erstes Ventil 8 angeordnet. Das erste Ventil 8 ist als Zweiwegeventil ausgebildet, so dass die Strömungsrichtung durch das Ventil 8 vorgebbar ist. Um die Luftfeuchte in der Luftturbinenanlage 1 insbesondere in der Luftturbine 2, insbesondere während des Stillstands der Luftturbinenanlage 1 nicht über einen zuvor festgelegten höchstzulässigen Wert ansteigen zu lassen, wird während des Expansionsbetriebes wenigsten ein Teilvolumenstrom der Luft aus der Luftturbine 2 über die erste Leitung 7 entnommen und dem Luftspeicher 9 zugeführt. Die entnommene Luft weist eine geringe relative Luftfeuchtigkeit auf, vorzugsweise eine Luftfeuchtigkeit unter 20% vorzugsweise unter 10%. Das erste Ventil 8 befindet sich dabei in einer ersten Stellung, in dem Luft von der Luftturbine 2 zum Luftspeicher 9 strömen kann, jedoch nicht in die entgegen gesetzte Richtung. Wenn es beim Stillstand der Luftturbinenanlage 1 (oder auch während des Betriebs der Luftturbinenanlage 1) zu einem Überschreiten der zuvor festgelegten höchstzulässigen Luftfeuchte in der Luftturbine 2 kommt, wird das Regelventil 8 derart geschaltet, dass die Luft vom Luftspeicher 9 zurück in die Luftturbine 2 strömen kann. Hierbei vermischt sich die trockene Luft aus dem Luftspeicher 9 mit der feuchteren Umgebungsluft und sorgt somit für eine Reduzierung der relativen Luftfeuchte in der Luftturbine 2. Hierdurch wird vermieden, dass Feuchtigkeit an der Turbinenwandung bzw. an Bauteilen innerhalb der Turbine auskondensieren kann, wodurch die Gefahr von Korrosion vermieden wird.

Um die Luftfeuchte innerhalb der Luftturbinenanlage 1 bzw. der Luftturbine 2 überwachen zu können, ist vorzugsweise ein Luftfeuchtemesser innerhalb der Luftturbine angeordnet, welcher mit einer nicht dargestellten Regeleinrichtung zusammenwirkt, die die Regelung der Luftströmung aus dem Luftspeicher 9 in die Luftturbine 2 regelt.

Die vorgestellte erfindungsgemäße Luftturbinenanlage, sowie die entsprechenden Verfahren zur Reduzierung der Luftfeuchte in der Luftturbinenanlage insbesondere während des Stillstands der Luftturbinenanlage sind dazu geeignet, ein Überschreiten einer zulässigen Luftfeuchte in der Luftturbinenanlage wirkungsvoll zu verhindern, so dass es nachfolgend zu keiner Kondensation von Luftfeuchte in der Luftturbine kommt und damit die Gefahr von Korrosion vermieden wird. Die erfindungsgemäße Luftturbinenanlage 1 ist dabei sehr einfach, preisgünstig und störungsunanfällig aufgebaut.

Grundsätzlich kann mit der beschriebenen Luftturbinenanlage 1 auch die Luftfeuchte während des Expansionsbetriebes der Luftturbinenanlage reduziert werden.

## Patentansprüche

1. Luftturbinenanlage (1), umfassend wenigstens eine Luftturbine (2) und wenigstens eine Druckluftquelle (3), wobei die Luftturbine (2) wenigstens einen Einlass (4) und einen Abluftschacht (5) aufweist und wobei der Einlass (4) der Luftturbine (2) über eine Zuleitung (6) mit der Druckluftquelle (3) verbindbar ist, wobei entlang einer Expansionsstrecke der Luftturbine (2), eine erste Leitung (7) mit einem ersten Ventil (8) abzweigt, und die erste Leitung (7) mit einem Luftspeicher (9) verbunden ist, **dadurch gekennzeichnet, dass** die Turbinenanlage (1) derart gestaltet ist, dass
- wenigstens ein Teilvolumenstrom trockener Luft während des Expansionsbetriebes der Luftturbinenanlage (1) über die erste Leitung (7) entnehmbar und im Luftspeicher (9) speicherbar ist; und
- die im Luftspeicher (9) gespeicherte trockene Luft, beim Erreichen einer höchst zulässigen Luftfeuchte in der Luftturbine, in die Luftturbine(2)zurückleitbar ist.

2. Luftturbinenanlage (1) nach Anspruch 1,
**dadurch gekennzeichnet, dass**
das erste Ventil (8) ein Zweiwegeventil ist.

3. Luftturbinenanlage (1) nach einem der vorherigen
Ansprüche,
**dadurch gekennzeichnet, dass**
die Luftturbinenanlage (1) eine zweite Leitung (10) mit einem zweiten Ventil (11) aufweist, und die zweite Leitung (10) mit dem Luftspeicher (9) verbunden ist.

4. Luftturbinenanlage (1) nach Anspruch 3,
**dadurch gekennzeichnet, dass**
die zweite Leitung (10) stromaufwärts der ersten Leitung (7) in die Luftturbine (2) oder in die Zuleitung (6) zur Luftturbine (2) mündet.

5. Luftturbinenanlage (1) nach einem der vorherigen
Ansprüche,
**dadurch gekennzeichnet, dass**
die Druckluftquelle (3) eine Karverne, oder ein Kompressor ist.

6. Luftturbinenanlage (1) nach einem der vorherigen
Ansprüche,
**dadurch gekennzeichnet, dass**
in der Zuleitung (6) zur Luftturbine (2) ein Regelventil (12) angeordnet ist.

7. Luftturbinenanlage (1) nach einem der vorherigen
Ansprüche,
**dadurch gekennzeichnet, dass**
in der Zuleitung (6) zur Luftturbine (2) ein Luftvorwärmer (13), insbesondere ein Rekuperator, angeordnet ist.

8. Verfahren zur Reduzierung der Luftfeuchte in Luftturbinenanlagen (1), wobei entlang der Expansionsstrecke der Luftturbine (2), eine erste Leitung (7) mit einem ersten Ventil (8) abzweigt, wobei das erste Ventil (8) derart schaltbar ist, dass es die erste Leitung (7) entweder in die eine oder die andere Richtung frei gibt und wobei die erste Leitung (7) mit dem Luftspeicher (9) verbunden ist
**gekennzeichnet durch** folgende Verfahrensschritte:
- Entnehmen wenigstens eines Teilvolumenstroms trockener Luft während des Expansionsbetriebs der Luftturbinenanlage (1) über die erste Leitung (7)
- Speichern der entnommenen trockenen Luft im Luftspeicher (9)
- Zurückleiten der im Luftspeicher (9) gespeicherten trockenen Luft über die erste Leitung (7) in die Luftturbine (2), beim Erreichen einer höchst zulässigen Luftfeuchte in der Luftturbine (2).

9. Verfahren zur Reduzierung der Luftfeuchte in Luftturbinenanlagen (1), wobei entlang der Expansionsstrecke der Luftturbine (2), eine erste Leitung (7) mit einem ersten Ventil (8) abzweigt, die Luftturbinenanlage (1) eine zweite Leitung (10) mit einem zweiten Ventil (11) aufweist, wobei die zweite Leitung (10) mit dem Luftspeicher (9) verbunden, die zweite Leitung (10) stromaufwärts der ersten Leitung (7) in die Luftturbine (2) oder in die Zuleitung (6) zur Luftturbine (2) mündet,
**gekennzeichnet durch** folgende Verfahrensschritte:
- entnehmen wenigstens eines Teilvolumenstroms der trockene Luft während des Expansionsbetriebs der Luftturbinenanlage (1) über die erste Leitung (7)
- speichern der entnommenen trockenen Luft im Luftspeicher (9)
- zurückleiten der im Luftspeicher (9) gespeicherten trockenen Luft über die zweite Leitung (10) in die Luftturbine oder in die Zuleitung (6) zur Luftturbine (2), beim Erreichen einer höchst zulässigen Luftfeuchte in der Luftturbine (2).

## Claims

1. Air turbine plant (1), comprising at least one air turbine (2) and at least one compressed air source (3), wherein the air turbine (2) has at least one inlet (4) and one exhaust air shaft (5), and wherein the inlet (4) of the air turbine (2) can be connected to the compressed air source (3) via a supply line (6),
wherein
along an expansion path of the air turbine (2), a first line (7) with a first valve (8) branches off, and the first line (7) is connected to an air storage vessel (9), **characterized in that**
the turbine plant (1) is set up such that
- during expansion operation of the air turbine plant (1), at least one partial volume flow of dry air can be taken off via the first line (7) and stored in the air storage vessel (9); and
- the dry air stored in the air storage vessel (9) can be routed back into the air turbine (2) when a maximum permissible air humidity is reached in the air turbine.

2. Air turbine plant (1) according to Claim 1,
**characterized in that**
the first valve (8) is a two-way valve.

3. Air turbine plant (1) according to one of the preceding claims,
**characterized in that**
the air turbine plant (1) has a second line (10) with a second valve (11), and the second line (10) is connected to the air storage vessel (9).

4. Air turbine plant (1) according to Claim 3,
**characterized in that**
the second line (10) opens upstream of the first line (7) into the air turbine (2) or into the supply line (6) to the air turbine (2).

5. Air turbine plant (1) according to one of the preceding claims,
**characterized in that**
the compressed air source (3) is a cavern or a compressor.

6. Air turbine plant (1) according to one of the preceding claims,
**characterized in that**
a control valve (12) is arranged in the supply line (6) to the air turbine (2).

7. Air turbine plant (1) according to one of the preceding claims,
**characterized in that**
an air pre-heater (13), in particular a recuperator, is arranged in the supply line (6) to the air turbine (2).

8. Method for reducing air humidity in air turbine plants (1), wherein along the expansion path of the air turbine (2), a first line (7) with a first valve (8) branches off, and the first valve (8) can be switched such that it opens the first line (7) either in one or the other direction, and wherein the first line (7) is connected to the air storage vessel (9),
**characterized by** the following method steps:
- during expansion operation of the air turbine plant (1), taking off at least one partial volume flow of dry air via the first line (7),
- storing the extracted dry air in the air storage vessel (9),
- routing the dry air stored in the air storage vessel (9) via the first line (7) back into the air turbine (2) when a maximum permissible air humidity is reached in the air turbine (2).

9. Method for reducing air humidity in air turbine plants (1), wherein along the expansion path of the air turbine (2), a first line (7) with a first valve (8) branches off, the air turbine plant (1) has a second line (10) with a second valve (11), wherein the second line (10) is connected to the air storage vessel (9), the second line (10) opens upstream of the first line (7) into the air turbine (2) or into the supply line (6) to the air turbine (2), **characterized by** the following method steps:
- during expansion operation of the air turbine plant (1), taking off at least one partial volume flow of dry air via the first line (7),
- storing the extracted dry air in the air storage vessel (9),
- routing the dry air stored in the air storage vessel (9) via the second line (10) back into the air turbine or into the supply line (6) to the turbine (2) when a maximum permissible air humidity is reached in the air turbine (2).

## Revendications

1. Installation de turbine à air (1), comprenant au moins une turbine à air (2) et au moins une source d'air comprimé (3), dans lequel la turbine à air (2) présente au moins un orifice d'entrée (4) et une cheminée d'évacuation d'air (5) et dans laquelle l'orifice d'entrée (4) de la turbine à air (2) peut être reliée à la source d'air comprimé (3) par l'intermédiaire d'une conduite d'alimentation (6), dans laquelle le long d'un trajet d'expansion de la turbine à air (2), une première conduite (7) bifurque avec une première soupape (8), et la première conduite (7) est reliée à un accumulateur d'air (9), **caractérisée en ce que** l'installation de turbine (1) est configurée de telle sorte que
- au moins un flux de volume partiel d'air sec peut être retiré pendant l'opération d'expansion de l'installation de turbine à air (1) par l'intermédiaire de la première conduite (7) et accumulé dans l'accumulateur d'air (9) ; et
- l'air sec accumulé dans l'accumulateur d'air (9), une fois atteinte une humidité de l'air à air admissible maximale dans la turbine, peut être reconduit dans la turbine à air (2).

2. Installation de turbine à air (1) selon la revendication 1, **caractérisée en ce que** la première soupape (8) est une soupape à deux voies.

3. Installation de turbine à air (1) selon l'une des revendications précédentes, **caractérisée en ce que** l'installation de turbine à air (1) présente une deuxième conduite (10) avec une deuxième soupape (11), et la deuxième conduite (10) est reliée à l'accumulateur d'air (9) .

4. Installation de turbine à air (1) selon la revendication 3, **caractérisée en ce que** la deuxième conduite (10) débouche en amont de la première conduite (7) dans la turbine à air (2) ou dans la conduite d'alimentation (6) dans la direction de la turbine à air (2).

5. Installation de turbine à air (1) selon l'une des revendications précédentes, **caractérisée en ce que** la source d'air comprimé (3) est une cavité ou un compresseur.

6. Installation de turbine à air (1) selon l'une des revendications précédentes, **caractérisée en ce que** dans la conduite d'alimentation (6) dans la direction de la turbine à air (2) est disposée une soupape de réglage (12) .

7. Installation de turbine à air (1) selon l'une des revendications précédentes, **caractérisée en ce que** dans la conduite d'alimentation (6) dans la direction de la turbine à air (2) est disposé un préchauffeur d'air (13), en particulier un récupérateur.

8. Procédé destiné à la réduction de l'humidité de l'air dans des installations de turbine à air (1), dans lequel le long du trajet d'expansion de la turbine à air (2), une première conduite (7) bifurque avec une première soupape (8), dans lequel la première soupape (8) peut commuter de telle sorte qu'elle libère la première conduite (7) soit dans l'une soit dans l'autre direction et dans lequel la première conduite (7) est reliée à l'accumulateur d'air (9), **caractérisé par** les étapes de procédé suivantes :
- retrait d'au moins un flux de volume partiel d'air sec pendant l'opération d'expansion de l'installation de turbine à air (1) par l'intermédiaire de la première conduite (7)
- accumulation de l'air sec retiré dans l'accumulateur d'air (9)
- reconduite de l'air sec accumulé dans l'accumulateur d'air (9) par l'intermédiaire de la première conduite (7) dans la turbine à air (2), une fois atteinte une humidité de l'air admissible maximale dans la turbine à air (2).

9. Procédé destiné à la réduction de l'humidité de l'air dans des installations de turbine à air (1), dans lequel le long du trajet d'expansion de la turbine à air (2), une première conduite (7) bifurque avec une première soupape (8), l'installation de turbine à air (1) présente une deuxième conduite (10) avec une deuxième soupape (11), dans lequel la deuxième conduite (10) est reliée à l'accumulateur d'air (9), la deuxième conduite (10) débouche en amont de la première conduite (7) dans la turbine à air (2) ou dans la conduite d'alimentation (6) dans la direction de la turbine à air (2), **caractérisé par** les étapes de procédé suivantes :
- retrait d'au moins un flux de volume partiel de l'air sec pendant l'opération d'expansion de l'installation de turbine à air (1) par l'intermédiaire de la première conduite (7)
- accumulation de l'air sec retiré dans l'accumulateur d'air (9)
- reconduite de l'air sec accumulé dans l'accumulateur d'air (9) par l'intermédiaire de la deuxième conduite (10) dans la turbine à air ou dans la conduite d'alimentation (6) dans la direction de la turbine à air (2), une fois atteinte une humidité de l'air admissible maximale dans la turbine à air (2).
